# NEW EUROPEAN PATENT SPECIFICATION

(11) **EP 2 659 780 B2**
(45) Date of publication and mention of the opposition decision: **23.06.2021**
(45) Mention of the grant of the patent: 13.02.2019
(21) Application number: 11817504.1
(22) Date of filing: 25.12.2011
(51) Int. Cl.: A23D 9/00, C11B 1/10, C11B 3/00

(54) **OMEGA 3 CONCENTRATE**
CONCENTRADO DE OMEGA 3
CONCENTRÉ D'OMÉGA 3

(30) Priority: 27.12.2010 CL 15872010
(43) Date of publication of application: 06.11.2013
(73) Proprietor: Golden Omega S.A., Santiago (CL)
(72) Inventor: SEPÚLVEDA REYES, Juvenal Antonio, Santiago (CL); BERRIOS CORNEJO, Miriam Rosa, Santiago (CL); FUENZALIDA DÍAZ, Miguel Ángel, Santiago (CL); MARKOVITS ROJAS, Alejandro, Santiago (CL); HARTING GLADE, Thomas Francis, Santiago (CL)
(74) Representative: Hoffmann Eitle
(86) International application number: PCT/CL2011/000082
(87) International publication number: WO 2012/088620

(56) References cited:
- EP-A2- 1 211 304
- WO-A1-2009/020406
- US-A- 5 679 809
- US-A- 5 945 318
- GUIL-GUERRERO et al.: "Purification process for cod-liver oil polyunsaturated fatty acids", JAOCS, vol. 76, 2001, pages 477-484,
- I. Quantitative Investigation of Component Fatty Acids: In: HILDITCH, T. P.: "THE CHEMICAL CONSTITUTION OF NATURAL FATS", 1947, Chapman & Hall Ltd.,, London pages 1pp, 465-466, * , copy of cited pages enclosed *
- CHRISTIE, W.W et al.: "Preparation of ester derivatives of fatty acids for chromatographic analysis", Advances in Lipid Methodology - Two,, 1993, pages 69-111,
- "Chapter 18. Carboxylic Acids and Their Derivatives" In: SOLOMONS, T. W. GRAHAM: "ORGANIC CHEMISTRY, 5th Edition", 1992, John Wiley & Sons, Inc.,, USA pages 778-779, 1pp, * , copy of cited pages enclosed *
- BREIVIK, H: "Chapter 5: Concentrates" In: BREIVIK, H: "Long-Chain Omega-3 Specialty Oils", 2007, the Oily Press pages 114-117,

## Description

This invention is related to an efficient and simple process for obtaining concentrates of ω-3 fatty acids containing over 80% of ω-3 fatty acids from compositions of matter that contain ω-3 fatty acids in the form of esters or free fatty acids.

The usefulness of long-chain polyunsaturated fatty acids of the ω-3 type, such as the octadecatrienoic acids (ALA; α-linolenic acid), eicosapentaenoic (EPA) and docosahexaenoic (DHA) acids, in the prevention of arteriosclerosis and cardiovascular diseases, relief of inflammatory conditions and delay in tumor growth is currently well known and documented. The natural isomers of these ω-3 fatty acids have all *cis* configurations and their double bonds are separated one from another by a methylene unit. When the double links are separated one from another by two or more simple bonds, they are named isolated double bonds. The experts recommend a daily intake of ω-3 fatty acids in doses that vary between 0.5 to 10 g. Therefore there is a growing interest in obtaining concentrates of ω-3 fatty acids for their incorporation into food products, nutraceuticals and pharmaceuticals.

One of the sources that is richest in ω-3 fatty acids, principally EPA and DHA, is the oil of marine origin such as fish oils of different species such as the sardine, jack mackerel, anchovy, salmon, codfish and krill, marine microalgae such as *Phaeodactylum tricornotum, Nannochloropsis sp.,* and vegetable oils such as seeds of linseed, hemp and others rich in ALA. The combined content of EPA and DHA in the oils of marine origin is typically between 10 and 35% in weight. Refined fish oils are currently being used in the food and nutraceutic industry as a source of ω-3 fatty acids. Generally speaking, the refining processes of the fish oils are adaptations of the classic refining processes of vegetable oils and manage to reduce the unpleasant smells and flavors characteristic of fish oils so as to allow their food and nutraceutical use. Some of these processes are divulged in U.S. patents 4915876, 4874629, 4804555, 4599143 and 4838997, among others. One advantage of the known fish oil refining processes, in addition to managing to make these oils suitable for human consumption, is that in these processes no significant losses are produced in the original concentration of ω-3 fatty acids in those oils.

Nevertheless, the preparation of special nutraceutic and pharmaceutical products requires products with a content of ω-3 fatty acids above 60%, at least 70%, preferably above 80% in weight, which evidently cannot be achieved using the traditional oil refining processes.

There are numerous processes in the state of the art for the production of concentrates with a content of ω-3 fatty acids above 60% in weight based on oils of marine origin. As EPA and DHA are found in marine oils mostly in the form of triglycerides and/or phospholipids as in the case of krill, most of the concentration processes begin with the chemical or enzymatic transesterification of the oils with an alcohol, normally ethanol, or hydrolyzing the oils with an aqueous alkaline solution to form the salts of the fatty acids and the free acids from these salts. The products of the transesterification or of the hydrolysis are then submitted to fractionation processes to reach the desired products. Normally it is impossible to obtain concentrates with a high content of ω-3 fatty acids with a single fractionation technique, therefore a combination of techniques are used.

The formation of complexes with urea is one of the fractionation techniques most commonly used for the recovery of concentrates with a high content of EPA and/or DHA.

Urea has the characteristic of forming solid complexes or adducts with saturated aliphatic organic compounds. When a solution of urea is added to a composition derived from oil that contains free fatty acids or their esters with a monohydric alcohol, a crystalline complex or adduct is formed that contains the most saturated fraction of the acids. The complexes can then be removed, leaving a raffinate of the more unsaturated acids. The complexation process has been used both with free acids as well as with their methyl or ethyl esters.

The raffinate can then be submitted to other stages of fractioning, such as, for example, molecular distillation of one or more stages which allows for products to be obtained with more than 80% in weight of ω-3 fatty acids, as disclosed by Breivik et al, in US 5,945,318.

Other purification techniques of the raffinate using urea that have been used include the fractional crystallization of the raffinate in the presence of an organic solvent such as acetone disclosed by Rubin et al. in patent US 4,792,418; high pressure liquid chromatography of the raffinate in columns filled with Ag-silica or Ag-alumina disclosed by Lee in patent US 6,664,405 and the treatment of the raffinate with active carbon and hexane, disclosed by Wang in patent US 5,679,809.

Nevertheless, the processes that involve the utilization of urea have various disadvantages and inconveniences. The first of these is the low recovery yield of the ω-3 fatty acids, normally of about 30% as the adducts of urea in addition to the saturated fatty acids also contain considerable amounts of ω-3 fatty acids and at present there is no economically efficient process for the recovery of unsaturated fatty acids from the adducts of urea, making the process very expensive and requiring the use of complex equipment and large-scale facilities in relation to the production. For example, for each ton of fish oil, between 60 to 80 kilos of the end product are recovered, that is, less than 8% (Breivik, Harald [2007], "Long Chain Omega-3 Specialty Oils", The Oily Press).

Additionally, the large amount of urea adducts formed, because for each ton of marine oil between one to three tons of urea are used, represents a formidable challenge for its environmental disposal; and, moreover, the production of two potent carcinogens, ethyl or methyl carbamates, have also been reported in the process (Cañas BI, Yurawecz MP [1999] "Ethyl carbamate formation during urea complexation for fractionation of fatty acids". J. Am Oil Chem Soc 76:537).

In spite of the disadvantages and complexities of the refining process of ω-3 fatty acids using urea, these processes represent more than 85% of the world's current production of concentrates with a content over 80% of ω-3 fatty acids.

Few processes have been disclosed for the production of concentrated ω-3 fatty acids that do not resort to a fractionation stage with urea.
One of these is the process described by Kokubu et al. in Japanese patent application JP 1982000131654 in which fish oil, after an alkaline hydrolysis is cooled between 25 and 5 °C to precipitate saturated fatty acid soaps. The supernatant, once separated and added to additional water, is extracted with an organic solvent like hexane, petroleum ether, benzene or other organic solvent. The residual aqueous phase is acidified with a mineral acid to form an organic phase containing free fatty acid which is extracted with an organic solvent like hexane, petroleum ether, benzene or other organic solvent, and then subjected to bleaching and deodorization by adsorption and steam distillation or molecular distillation.

The process disclosed is only capable of producing concentrates with content between 60 to 70% of EPA and DHA, which is still insufficient for the formulation of special products for pharmaceutical and nutraceutic use. Additionally, it uses one or more extraction stages with hydrocarbons or hydrocarbonated solvents whose maximum permissible concentration in products for human consumption is very restricted. In the processes for the production of nutraceutical or pharmaceutical ingredients, the use of organic solvents whose maximum permissible concentration in products for human consumption is very low - less than 1 mg/kg (as in the case of hexane) - is not convenient because, among other technical and economic inconveniences, the removal of those solvents, in order to comply with the regulations, could affect the quality of the ω-3 fatty acids.

Morgan, in application WO 2009/20406 A1 discloses a concentration process of ω-3 fatty acids from fish oil by means of hydrolysis at a low temperature and does not use organic solvents whose maximum permissible concentration in products for human consumption is very low, less than 1 mg/kg. The concentrations of ω-3 fatty acids that can be reached in the process disclosed are not revealed in the specification, but the examples indicate that the concentrations of the direct products of the process disclosed vary between 46 to 65%. Although it is obvious, the inventor discloses that the fatty acids enriched in polyunsaturated fatty acids "obtained using the methods of the invention can be further purified by means of known techniques such as distillation, fractionated crystallization or formation of a urea complex". In Example 2, the concentration of ω-3 fatty acids of the product obtained directly by means of the process of the invention was 65%. The product submitted to a recrystallization stage (Example 3) had a content of 75% of ω-3 fatty acids, still insufficient for use in special nutraceutical and pharmaceutical applications.

Another process is disclosed by Cornieri et al. in US Patent 5,130,061 where,after the chemical transesterification of fish oil, the esters are extracted with an organic solvent like hexane and after removing the solvent the product is subjected to silicagel chromatography followed by molecular distillation to obtain an EPA and DHA concentrate having less than 70% in weight. To increase the concentration, the chromatografied product is first dissolved in acetone and crystallized at -40 °C and the crystallized product is subjected to a two step molecular distillation leading to a product containing DHA esters between 85 and 95% in weight. The process also resorts to the use of hexane having the inconvenience mentioned above. The chromatographic purification stage makes the process economically unattractive, and its industrial implementation is also complex. Moreover, the recovery yield of ω-3 fatty acids is low, less than 30%.

Up until 1986, the Norwegian company Jahres Fabrikker produced a concentrate of EPA and DHA from fish oil. The process consisted of saponifying the fish oil with an aqueous solution of sodium hydroxide to form solid soaps that were later extracted with a solvent, typically methanol. The methanol extract was acidulated and the free fatty acids with a content of EPA and DHA of 50% were isolated. (Breivik, Harald [2007] "Long Chain Omega-3 Specialty Oils" The Oily Press). The fatty acids were distilled molecularly to reach a maximum concentration of 65%.

No efficient processes are known in the state of the art for obtaining concentrates of ω-3 fatty acids with a content of ω-3 fatty acids over 80% that do not resort to fractioning with urea or organic solvents, like hydrocarbons whose maximum permissible concentration in products for human consumption is restricted.

For special pharmaceutical and nutraceutical applications, it is important that in the concentrates of ω-3 fatty acids those fatty acids correspond to the natural isomers with all *cis* configurations and with double bonds arranged in a system of isolated double bonds separated one from the other by a methyl group.

Nevertheless, during the processes for the production of concentrates of ω-3 fatty acids, *trans* type isomers and also conjugated isomers are produced where two or more double bonds are separated by a single simple bond.

Processes have been divulged for the production of concentrates of ω-3 fatty acids in which changes in the natural configuration of those acids have not taken place, but with no reference whatsoever to the problem of the isomerization of the double bonds. Surprisingly, it has been found that in the products obtained by the process of this invention, no trans type isomers or isomers with conjugated double bonds have been detected.

Consequently, the objective of this invention is to provide an efficient and simple process that does not use fractioning with urea or organic solvents whose maximum permissible concentration in products for human consumption is restricted, for the production of concentrates of ω-3 fatty acids containing over 80% of ω-3 fatty acids based on compositions of matter that contain these fatty acids in the form of esters or free fatty acids, suitable for human consumption and of pharmaceutical quality.

This object is achieved by a process for obtaining concentrates of ethyl esters containing over 80% in weight of ω-3 fatty acid ethyl esters from a composition of matter comprising ω-3 fatty acid esters or free ω-3 fatty acids, the process comprising the steps of:
a) contacting the composition of matter with ethanol having a water content of 4% or less and an alkali metal hydroxide at a temperature between 60°C and 200°C to form a liquid mixture comprising alkali metal salts of fatty acids;
b) cooling the liquid mixture to a temperature between 50 and -20°C to form a solid and a liquid phase, and separating the liquid phase comprising ω-3 fatty acids from the solid phase;
c) contacting the liquid phase of step b) with an acid to form an acidified mixture comprising less than 10% in weight of water, ω-3 fatty acids and salts of the alkali metal and the acid, and separating the salts of the alkali metal from the acidified mixture to obtain the acidified mixture free of the salts of the alkali metal;
d) heating the acidified mixture free of salts of the alkali metal with an esterification catalyst at a temperature between 50 °C and 150 °C to form a mixture comprising ethyl esters of ω-3 fatty acids;
e) contacting the mixture of step d) with an alkali to form a neutralized mixture; and
f) distilling the neutralized mixture to obtain a distillate comprising at least 80% of ethyl esters of ω-3 fatty acids.

Also disclosed herein is an ω-3 fatty acid ethyl ester concentrate obtainable according to the process of the invention wherein all the double bonds of the fatty acids have an all *cis* configuration separated among them by a methylenic unit.

Further disclosed herein is an ω-3 fatty acid ethyl ester concentrate comprising at least 80% in weight of ω-3 fatty acid ethyl esters wherein all the double bonds of the fatty acids have an all *cis* configuration separated among them by a methylenic unit.
Preferred embodiments are set forth in the subclaims.

For the process described in this patent application, the raw material used is any composition of matter that contains esterified ω-3 fatty acids either in the form of triglycerides, phospholipids or other forms, such as in oils or fats of animal origin, such as crude or refined fish oil of different species such as sardines, jack mackerel, anchovy, salmon, cod, krill, marine microalgae such as *Phaeodactylum tricornotum, Nannochloropsis sp,* of vegetable origin such as vegetable oils of linseed, hemp seeds, mixtures of oils or fats of marine origin with vegetable oils, or also in the form of monoesters or free fatty acids, products of different sources or commercial processes. Typically, the combined content of ω-3 fatty acids (EPA and DHA) in the fish oils is between 10 to 35% in weight, while in the vegetable oils (ALA) it is very variable and may reach close to 50%, as in the oil from linseed. In this invention, the word oil also includes fats that contain ω-3 fatty acids. The difference between oil and fat lies in that the former is liquid while the latter is solid at room temperature. The lipids extracted from various marine microalgae are solid at room temperature and can contain between 5 to 30% of ω-3 fatty acids. Also useful as raw material for this invention are the lipids extracted from insects, insect larvae and plants genetically modified for the production of long chain ω-3 fatty acids.

In order to carry out the invention, a composition of matter comprising free or esterified ω-3 fatty acids is subjected to a neutralizing or saponifying step with an alkali to form a reacted mixture comprising the alkali metal salts of the fatty acids. To this end,the composition of matter is contacted with anhydrous ethanol having a water content of at most 4% in weight, preferably less than 1% in weight and an alkali, preferably sodium hydroxide or an alkaline solution at a temperature between 60°C to 200°C, preferably at 120°C. The alkaline solution can be either an aqueous solution of sodium hydroxide 40 % by weight or an ethanolic solution of sodium hydroxide of less than 50% by weight.

At this temperature, the reaction time for saponification or neutralization is only a few minutes, allowing the saponification or neutralization to be carried out in a continuous process. The quantity of ethanol used in the saponification or neutralization step can vary between 0.5 to 10 kg per kg of composition of matter, preferably between 1 to 6 kg per kg of the composition of matter while the amount of alkali used in the saponification or neutralization step is equal or greater than 90% molar, preferably greater than 100%, of the saponification or iodine index, which in the case of the using of sodium hidroxide represents at least .712 g of sodium hydroxide per kg of composition of matter used material multiplied by the saponification index of the composition of matter used.

The reaction can be carried out either batchwise or continuously in a stirred vessel or in a tubular reactor or in another type habitually used for the saponifying of oils and fats. When the composition of matter used is fish oil, either raw or refined, alone or combined with vegetable oil, it can optionally be purified to remove possible Persistent Organic Contaminants (POPs) that can be present by means of processes known in the state of the art. POPs are toxic chemical products that accumulate in the fatty tissue of the live organisms. Relatively elevated levels of POPs have been found in different species of fish and as a result in fish meal and oil produced from these species. The POPs comprise pesticides, industrial chemical products like polychlorobiphenyls, sub products of the industrial processes like dioxins and furans. POPs can be removed as well from the end products of the present process.

At the end of the saponification or neutralization step, the reacted mixture is cooled to a temperature between 50 and -20 °C, preferably between 50 and 0 °C, leading to a precipitate comprising saturated fatty acids and also part of the alkali metal salts formed during the reaction. The cooling of the reacted mixture can be carried out either batchwise or in a continuously in an agitated jacketed recipient provided with a suitable agitator, like flat blade turbines or anchor agitators, among others, or be cooled by evaporation.The cooling can be carried as well in a tubular reactor, preferably stirred with an agitator with surface scrappers, or other types habitually used in the crystallization of oils and fats.

The solids formed during the cooling of the reacted mixture, comprising alkali metal salts and saturated fatty acids are removed from the cooled mixture by mechanical means like centrifugation or filtration, preferably by vacuum or pressure filtration. The liquid or filtrate obtained, can be further concentrated by evaporation and then cooled again allowing the formation of more precipated solids and followed by the separation of the solids as described. The resulting liquid or filtrate is subsequently acidified with an acid or with ethanolic solution of an acid where the acid amounts up to 50% in weight of the solution, preferably sulfuric acid, to obtain an acidifyed mixture comprising free ω-3 fatty acids and solid alkali or sodium metal salts given that the water content of the acidifyed mixture is less than 10% inweight of water, normally less than 5 % If sulfuric acid is used in the ethanol-acid solution, the formation of the deleterious ethanol sulfates can be prevented by preparing the solution at low temperature less than 20°C degree, preferably less 10°C and with less than 20 % in weight of sulfuric acid.

The amount of acid or acid-ethanol solution to be utilized is between 1% to 10% above the estequiometric value of the alkalinity total of the liquid phase. The alkali metal salt, usually sodium sulfate, formed during the acidifying step, being insoluble can be separated either by settling, centrifuging or filtering, leaving behind a clarified liquid comprising ω-3 fatty acids.Next, the acidified mixture or the clarified liquid is heated to a temperature between
50 and 150 °C , whereby the fatty acids react with the ethanol, forming an esterified mixture comprising ethyl esters of ω-3 fatty acids. The reaction is catalyzed by sulfuric acid, in case this acid was used in the acidifying step, but if needed other catalyzers such as p-toluene sulfonic acid can be added to the acidified mixture.

Next, the esterified mixture is contacted with an aqueous or ethanolic solution of an alkali selected from the group consisting of an oxide, hydroxide or carbonate of an alkali metal, ammonia and ammonium hydroxide, preferably sodium hydroxide to form either a neutral or alkaline mixture and the ethyl esters of ω-3 fatty acids are separated from the said mixture by state of the art techniques as illustrated in the Examples.

One way is evaporating the solvent from the neutral or alkaline mixture giving rise to a light phase comprising the ethyl esters of ω-3 fatty acids and a heavy phase comprising organic salts or glycerine then separating both phases either by decantation or by centrifuging. When an aqueous alkaline solution is used in the neutralizing step, the separation can be carried out without the evaporation step.

Next, the separated light phase is subjected to one or more vacuum distillation steps, leading to a distillate comprising at least 80% in weight of of ω-3 fatty acids. The distillation is carried out preferably in a shorth path or molecular distillation column at a temperature between 100°C to 250°C and at a pressure of less than 1mbar.

The process of the present invention has the additional advantage of high recovery yield of ω-3 fatty acids, which in case of using fish oil or even input materials with low of ω-3 fatty acids content, can be over 40% a figure unexpectedly higher than in the state of the art processes, which require input materials of high ω-3 fatty acids content, typically over 28 % . Surprisingly no undesirable side products such as *trans* fatty acids or di-ethyl sulfate are generated in the process and the ω-3 fatty acid ethyl esters do not have conjugated double bonds.

The following examples illustrate ways to carry out the process for the obtention of ω-3 fatty acids containing more than 80% of ω-3 fatty acids from compositions of matter that contain either free or esterified ω-3 fatty acids as outlined above.

Analyses of ω-3 fatty acids were performed according to the Official Methods and Recommended Practices of the AOCS, 6th Edition.

### Examples

### Example 1.

### Obtention of a concentrate of ω-3 fatty acid ethyl esters from sardine oil.

276 g of sodium hydroxide were mixed in a 20 l Parr stirred reactor with 6 kg of 99.2 % ethanol and 2 kg of sardine oil (South Pacific Korp.) having a total content of 32.9% in weight of ω-3 fatty acids (16.8% EPA and 11.3 DHA). The mixture was heated to 120°C under agitation at 250rpm for 5 minutes and then let to cool down to 35°C under mild stirring. The cooled mixture was filtered in a Buchner funnel through a polyester cloth filter medium under vacuum collecting a first filtrate. The filter cake was washed with 6000 g of ethanol collecting a second filtrate which was mixed with the first filtrate and said mixture was acidified with 1700 g a 10% sulfuric acid-ethanol solution and the acidified mixture formed cooled to 0°C until the formation of a dispersed solid phase, which was subsequently separated by centrifuging the cooled acidified mixture obtaining a clear supernatant liquid. Said supernatant was charged into a stirred reactor having an external condenser connected to a vacuum line. 70% of the load was distilled off at normal pressure, then 25 g of 20% sulfuric acid in ethanol was added and the mixture formed was heated to 76°C for 30 minutes and let to cool down to 20°C. 150 g of 8% sodium hydroxide in ethanol was added to the cooled mixture, followed by complete evaporation of the ethanol from the mixture at a pressure of 10 mbar. The residue of the evaporation was left to settle, recovering 205 g of settled solids. The supernatant liquid comprising 1056 g of crude ethyl esters was washed with water and then fed to a short path distillation column (UIC, KDL 5) and was subjected to two distillation steps. In the first distilation step the temperature of the evaporating surface was 85°C, the condenser temperature was 5°C and the pressure was 0.02mbar. The residue of first distillation step was distilled at a temperature of 110°C, condenser temperature 5°C and pressure 0.01 mbar, obtaining 451 g distillate of said second distillation step of 97.1% in weight of ω-3 fatty acid ethyl esters comprising 45.2% of EPA and 37.3 % DHA. The overall yield of ω-3 fatty acid was 60%.

### Example 2.

### Obtention of a concentrate of ω-3 fatty acid ethyl esters from horse mackerel oil.

281 g of sodium hydroxide were mixed in a 20 l Parr stirred reactor with 11kg of 99.2 % ethanol and 2 kg of horse mackerel oil (South Pacific Korp.) having a total content of 38.5 % in weight of ω-3 fatty acids (12.5% EPA and 20.4% DHA). The mixture was heated to 120°C under agitation at 250rpm for 5 minutes and then let to cool down to 35°C under mild stirring. The cooled mixture was filtered in a Buchner funnel through a polyester cloth as filter medium undervacuum, collecting a first filtrate. The filter cake was washed with 3000 g of ethanol collecting a second filtrate which was mixed with the first filtrate and said mixture was acidified with 370 g of 36% HCl mixed with 370 g of ethanol resulting in the formation of a dispersed solid phase, which was subsequently separated by centrifuging the cooled acidified mixture obtaining a clear supernatant liquid. Said supernatant was mixed with 6 g of toluene sulfonic acid and charged into a stirred reactor having an external condenser connected to a vacuum line. 70% of the load was distilled off at normal pressure, then 20 g of 50% sodium hydroxide in ethanol was added followed by complete evaporation of the ethanol from the mixture at a pressure of 10 mbar. The residue of the evaporation was left to settle, recovering 205 g of settled solids. The supernatant liquid comprising 977 g of crude ethyl esters was washed with a 2% aqueous solution of sodium sulfate and then fed to a short path distillation column (UIC, KDL 5) and subjected to two distillation steps. In the first distillation step, the temperature of the evaporating surface was 84°C, the condenser temperature was 5°C and the pressure was 0.02mbar. The residue of the first distillation step was distilled at a temperature of 114°C, condenser temperature 5°C and pressure 0.01 mbar, obtaining 508 g distillate of said second distillation step of 92.6 % in weight of ω-3 fatty acid ethyl esters comprising 30.2% of EPA and 52.3 % DHA. The overall yield of ω-3 fatty acid was 56%.

### Example 3.

### Obtention of a concentrate of ω-3 fatty acid ethyl esters from linseed oil.

560 g of 50 % aqueous sodium hydroxide solution were mixed in a 20 l Parr stirred reactor with 10 kg of 99.2 % ethanol and 2 kg of linseed oil (Terrasol) having a total content of 51.7 % in weight of ω-3 fatty acids (51.7 ALA). The mixture was heated to 80°C under agitation at 250 rpm for 25 minutes and then let to cool down to 35°C under mild stirring. The cooled mixture was filtered in a Buchner funnel through a polyester cloth filter medium under vacuurr collecting a first filtrate. The filter cake was washed with 2000 g of ethanol collecting a second filtrate which was mixed with the first filtrate and said mixture was acidified with 180 of concentrated sulfuric acid resulting in the formation of a dispersed solid phase. The acidified mixture was mixed with 7 g of toluene sulfonic acid and charged into a stirred reactor having an external condenser connected to a vacuum line. 70% of the load was distilled off at normal pressure, then the concentrated acidified mixture was filtered under presure and 20 g of 50% sodium hydroxide in ethanol was added to the filtrate followed by complete evaporation of all ethanol from the mixture at a pressure of 10 mbar then allowed to settle and the settled solids were separated . The supernatant liquid comprising 871 g of crude ethyl esters was washed with water and then fed to a short path distillation column (UIC, KDL 5) and was subjected to two distillation steps. In the first distilation step the temperature of the evaporating surface was 72°C, the condenser temperature was 5°C and the pressure was 0.02mbar. The residue of the first distillation step was distilled at a temperature of 95°C, condenser temperature 5°C and pressure 0.01 mbar, obtaining 580 g residue of said second distillation step of 89.6 % in weight of ethyl esters of ALA. The overall yield of ω-3 fatty acid was 45%.

### Example 4.

### Obtention of a concentrate of ω-3 fatty acid ethyl esters from krill oil.

The conditions described in Example 1 were replicated using krill oil having 27.5 % in weight of ω-3 fatty acids (9.5% EPA and 15.4% DHA). 354 g of distillate was obtained from the second distilling step having 92.3 % in weight of ω-3 fatty acid esters (28.3% EPA and 56.6% DHA).
The overall yield of ω-3 fatty acids was 54%.

### Example 5.

### Obtention of a concentrate of ω-3 fatty acid ethyl esters from a mixture of sardine and linseed oil.

The conditions described in Example 1 were replicated using 500 g of linseed oil mixed with 1500 g of sardine oil. 514 g of distillate having 88.9 % in weight of ω-3 fatty acid esters were obtained (ALA 29.8%, EPA 26.3% and DHA 17.1%)
The overall yield of ω-3 fatty acids was 47%.

### Example 6.

### Obtention of a concentrate of ω-3 fatty acid ethyl esters from fish oil fatty acids.

280 g of sodium hydroxide were mixed in a 20 1 Parr stirred reactor with 10 kg 99.2 % ethanol and 2 kg of fish oil fatty acids(South Pacific Korp.) having a total content of 26.8 % in weight of ω-3 fatty acids (13.6% EPA and 9.2 % DHA). The mixture was heated to 60 °C under agitation at 250rpm for 5 minutes and then let to cool down to 35°C under mild stirring. The cooled mixture was filtered in a Buchner funnel through a polyester cloth filter medium under vacuumcollecting a first filtrate. The filter cake was washed with 3000 g of ethanol collecting a second filtrate which was mixed with the first filtrate and said mixture was acidified with 400 g of 36% HCl mixed with 400 g of ethanol resulting in the formation of a dispersed solid phase, which was subsequently separated by centrifuging the cooled acidified mixture obtaining a clear supernatant liquid. Said supernatant liquid was mixed with 5 g of toluene sulfonic acid and charged into a stirred reactor having an external condenser connected to a vacuum line. 70% of the load was distilled off at normal pressure, then 100 g of 8% sodium hydroxide in ethanol was added followed by evaporation of all ethanol from the mixture at a pressure of 10 mbar. The residue of the evaporation was filtered recovering 820 iltrate of crude ethyl esters which were fed to a short path distillation column (UIC, KDL 5) and subjected to two distillation steps. In the first distilation step the temperature of the evaporating surface was 84°C, the condenser temperature was 5°C and the pressure was 0.02mbar. The residue of the first distillation step was distilled at a temperature of 114°C, condenser temperature 5°C and pressure 0.01 mbar, obtaining 409 g distillate of said second distillation step of 87.0 % in weight of ω-3 fatty acid ethyl esters comprising 40.5% of EPA and 33.5 % DHA. The averall yield of ω-3 fatty acid was 60 %.

### Example 8.

### Obtention of a concentrate of ω-3 fatty acid ethyl esters from a fish oil having low ω-3 fatty acid content.

Example 1 was replicated using a low quality crude fish oil with 23.5 % of ω-3 fatty acids (12.5 % EPA and 8.4 % DHA) having an acid number of 19 mg KOH/g.

A distillate comprising 90.3% of ethyl esters of ω-3 fatty acids was obtained with 55.1 % EPA and 27.5% DHA. The overall yield of ω-3 fatty acids was 42 %.

### Example 8.

### Obtention of a concentrate of ω-3 fatty acid ethyl esters from sardine oil.

280 g of sodium hydroxide were mixed in a 20 l Parr stirred reactor with 6 kg 99.2 % ethanol and 2 kg of sardine oil (South Pacific Korp.) having a total content of 32.9% in weight of ω-3 fatty acids (16.8% EPA and 11.3 DHA). The mixture was heated to 120°C under agitation at 250rpm for 5 minutes and then let cool down to 48°C under mild stirring. The cooled mixture was filtered in a Buchner funnel through a polyester cloth as filter media under vacuum collecting a first filtrate. The filter cake was washed with 2000 g of ethanol collecting a second filtrate which was mixed with the first filtrate and concentrated by evaporating about 50% of the volume and then cooled to 0 °C and filtrated, obtaining a third filtrate. Said filtrate was acidified with 1200 g of a 10% sulfuric acid-ethanol solution and the acidifyed mixture formed cooled to 0°C until the formation of a dispersed solid phase, which was subsequently separated by centrifuging the cooled acidified mixture, obtaining a clear supernatant liquid.

Said supernatant liquid was charged into a stirred reactor having an external condenser connected to a vacuum line. 50% of the load was distilled off at normal pressure, then 25 g of 20% sulfuric acid in ethanol was added to the mixture formed and heated to 78°C for 30 minutes and let to cool down to 20°C. 100 g of 8% sodium hydroxide in ethanol was added to the cooled mixture, followed by the complete evaporation ethanol from the mixture at a pressure of 10 mbar. The residue of the evaporation was left to settle. The supernatant liquid comprising 556 g of crude ethyl esters was washed with water and then fed to a short path distillation column (UIC, KDL 5) and was subjected to two distillation steps. In the first distilation step the temperature of the evaporating surface was 88°C, the condenser temperature was 5°C and the pressure was 0.02 mbar. The residue of the first distillation step was distilled at a temperature of 115°C, condenser temperature 5°C and pressure 0.01 mbar, obtaining a residue of said second distillation step of 99.7 % inweight of ω-3 fatty acid ethyl esters.

### Example 9

### Analysis of trans fatty acids in concentrates of ω-3 fatty acid ethyl esters.

Samples of concentrates obtained in examples 1 through 8 were subjected for the detection of *trans* faty acids by means of gas chromatography. None of the samples exhibited the presence of *trans* fatty acids.

### Example 10.

### Analysis of conjugated fatty acids in concentrates of ω-3 fatty acid ethyl esters

Samples of concentrates obtained in examples 1 through 8 were subjected for the detection of conjugated fatty acids by means of UV absorption spectroscopy. None of the samples exhibited the presence of conjugated fatty acids.

### Example 11.

### Analysis of diethyl sulfate (DES) in concentrates of ω-3 fatty acid ethyl esters

Samples of concentrates obtained in examples I through 8 were subjected for the detection of conjugated fatty acids by means of UV absorption spectroscopy. None of the samples exhibited the presence of conjugated fatty acids.

### Example 12.

Determination of titratable acidity (free acid content), peroxide value and anisidine value in concentrates of ω-3 fatty acid ethyl esters.

Samples of concentrates obtained in examples 1 through 8 were subjected to the determination of titratable acidity (free acid content), peroxide value and anisidine value according to the procedures of *the Official Methods and Recommended Practices of the AOCS.*

The free acid content of all samples was less than 1 mg KOH/g, the peroxide content was less than 3 meq/kg and the anisidine value was less than 15.

## Claims

1. An efficient and simple process for obtaining a concentrate containing more than 80% by weight of ω-3 fatty acid ethyl esters from a composition of matter comprising ω-3 fatty acid esters or free ω-3 fatty acids, the process comprising the steps of:
a) contacting the composition of matter with ethanol having an ethanol content of at least 96% by weight and containing 4% by weight or less of water, and an alkali metal hydroxide at a temperature between 60°C and 200°C to form a liquid mixture comprising alkali metal salts of fatty acids;
b) cooling the liquid mixture to a temperature between 50 and -20°C to form a solid and a liquid phase, and separating the liquid phase comprising ω-3 fatty acids from the solid phase;
c) contacting the separated liquid phase of stage b) with an acid to form an acidified mixture with a water content under 10%, wherein the mixture consists of a solid phase that includes the alkali metal salt of the acid and a liquid phase that comprises ω-3 fatty acids;
d) heating the acidified mixture of step c) free of salts of the alkali metal in the presence of an esterification catalyst at a temperature between 50 °C and 150 °C to form a mixture comprising ethyl esters of ω-3 fatty acids;
e) contacting the mixture of step d) with an alkali to form a neutralized mixture; and
f) distilling the neutralized mixture to obtain a distillate comprising more than 80% of ethyl esters of ω-3 fatty acids.

2. The process of claim 1 wherein the temperature in step a) is between 90°C and 150°C.

3. The process of claim 1 wherein the temperature in step a) is 120°C.

4. The process of claim 1 wherein the temperature in step b) is between 50°C and 0°C.

## Patentansprüche

1. Effizientes und einfaches Verfahren zur Gewinnung eines Konzentrats, das mehr als 80 Gew.-% w-3-Fettsäureethylester enthält, aus einer Stoffzusammensetzung, die ω-3-Fettsäureester oder freie ω-3-Fettsäuren umfasst, wobei das Verfahren die folgenden Schritte umfasst:
a) Kontaktieren der Stoffzusammensetzung mit Ethanol mit einem Ethanolgehalt von mindestens 96 Gew.-% und einem Wassergehalt von 4 Gew.-% oder weniger und einem Alkalimetallhydroxid bei einer Temperatur zwischen 60°C und 200°C, um eine flüssige Mischung, umfassend Alkalimetallsalze von Fettsäuren, zu bilden;
b) Abkühlen der flüssigen Mischung auf eine Temperatur zwischen 50 und -20 °C, um eine feste und eine flüssige Phase zu bilden, und Abtrennen der flüssigen Phase, die ω-3-Fettsäuren umfasst, von der festen Phase;
c) Kontaktieren der abgetrennten flüssigen Phase von Stufe b) mit einer Säure, um eine angesäuerte Mischung mit einem Wassergehalt von unter 10% zu bilden, wobei die Mischung aus einer festen Phase, die das Alkalimetallsalz der Säure enthält, und einer flüssigen Phase, die ω-3-Fettsäuren umfasst, besteht;
d) Erhitzen der angesäuerten Mischung von Schritt c), frei von Salzen des Alkalimetalls, in Gegenwart eines Veresterungskatalysators bei einer Temperatur zwischen 50°C und 150°C, um eine Mischung zu bilden, die Ethylester von ω-3-Fettsäuren umfasst;
e) Inkontaktbringen der Mischung von Schritt d) mit einem Alkali, um eine neutralisierte Mischung zu bilden; und
f) Destillieren der neutralisierten Mischung, um ein Destillat zu erhalten, das mehr als 80% Ethylester von ω-3-Fettsäuren umfasst.

2. Verfahren nach Anspruch 1, wobei die Temperatur in Schritt a) zwischen 90 °C und 150 °C liegt.

3. Verfahren nach Anspruch 1, wobei die Temperatur in Schritt a) 120 °C beträgt.

4. Verfahren nach Anspruch 1, wobei die Temperatur in Schritt b) zwischen 50 °C und 0 °C liegt.

## Revendications

1. Procédé efficace et simple d'obtention d'un concentre contenant plus de 80 % en poids d'esters éthyliques d'acide gras ω-3 à partir d'une composition de matière comprenant des esters d'acide gras ω-3 ou sans acides gras ω-3, le procédé comprenant les étapes de :
a) mise en contact de la composition de matière avec de l'éthanol ayant une teneur en éthanol d'au moins 96 % en poids et contenant 4 % en poids ou moins d'eau, et un hydroxyde de métal alcalin à une température comprise entre 60°C et 200°C pour former un mélange liquide comprenant des sels de métal alcalin d'acides gras ;
b) refroidissement du mélange liquide à une température comprise entre 50 et -20°C pour former une phase solide et une phase liquide, et de séparation de la phase liquide comprenant des acides gras ω-3 à partir de la phase solide ;
c) mise en contact de la phase liquide séparée de l'étape b) avec un acide pour former un mélange acidifie ayant une teneur en eau inferieure à 10 %, où le mélange est constitué d'une phase solide qui comprend le sel de métal alcalin de l'acide et une phase liquide qui comprend des acides gras ω-3;
d) chauffage du mélange acidifie de l'étape c) sans les sels du métal alcalin en présence d'un catalyseur d'estérification à une température comprise entre 50°C et 150°C pour former un mélange comprenant des esters éthyliques d'acides gras ω-3;
e) mise contact du mélange de l'étape d) avec un agent alcalin pour former un mélange neutralise ; et
f) de distillation du mélange neutralise pour obtenir un distillat comprenant plus de 80 % d'esters éthyliques d'acides gras ω-3.

2. Procédé selon la revendication 1, la température dans l'étape a) étant comprise entre 90°C et 150°C.

3. Procédé selon la revendication 1, la température dans l'étape a) étant de 120°C.

4. Procédé selon la revendication 1, la température dans l'étape b) étant comprise entre 50°C et 0°C.
